# EUROPEAN PATENT SPECIFICATION

(11) **EP 0 336 585 B1**
(45) Date of publication and mention of the grant of the patent: **24.05.1995**
(21) Application number: 89302583.3
(22) Date of filing: 16.03.1989
(51) Int. Cl.: G06F 11/32, G06F 11/00

(54) **Error message display generation**
Erzeugung von Fehlernachrichtenanzeige
Génération d'affichage de message d'erreur

(30) Priority: 08.04.1988 US 179180
(43) Date of publication of application: 11.10.1989
(73) Proprietor: International Business Machines Corporation, Armonk, N.Y. 10504 (US)
(72) Inventor: Child, Garry Lee, Austin Texas 78759 (US); Hrabik, Richard Joseph, Leander Texas 78641 (US); Michalk, Beverley Joan, Austin Texas 78746 (US); Rousse, Curtis James, Austin Texas 78727 (US)
(74) Representative: Bailey, Geoffrey Alan

(56) References cited:
- EP-A- 0 295 379
- REVIEW OF THE ELECTRICAL COMMUNICATION LABORATORIES, vol. 29, nos. 5-6, May-June 1981, pages 581-596, Tokyo, JP; K. AIHARA et al.: "Design of terminalsupervisor in transmission facility"
- PHILIPS TELECOMMUNICATION REVIEW, vol. 42, no. 3, September 1984, pages 149-169, Hilversum, NL; C.G. GOLDER et al.: "The multifunction operations system"

## Description

This invention relates to error message display generation and is intended to provide methods of automatically displaying selected messages based on error log information in a computer system in an accurate and user friendly manner.

It is well known in the art that in communication sub-systems, a component may log errors for later analysis. During the execution of one of a plurality of communication services or functions, a problem may occur which will cause an associated error to be logged to the error log for later analysis. Typically, the error information is in a language which is not readily understood by the average user of the communication sub-system. Moreover, the component performing the service or function is only concerned with logging the error information. Thus, the user in prior systems may not know that an error has been logged which may prevent a function from being executed or a service performed. This becomes more of a problem in a multitasking environment. In this environment, the user may initiate one task and then change to a different screen to initiate a different task. While the user is operating on the different screen, the first task may encounter problems which prevents the task from executing. For purposes of illustration, the user may initiate the transfer of a large file and then switch to a personal editor function on the system while the file is being transferred. If a problem occurs which prevents the file from transferring, the user may never know of the error unless the progress of the transfer is frequently monitored. As noted above, even if the user is aware of an error, the information stored in the error log may be very cryptic and not easily understood.

"The Multifunction operating system", Philips Telecommunication Review, Vol. 43, No. 3, September 1984, pages 149-169, discloses a second-generation centralised multiprocessor operations and maintenance system for the support of both co-located and remote digital switches, which supplies the user with real-time user-generated alarm messages.

"Design of terminal supervisor in transmission facility", Review of the electrical communications laboratory, Vol. 29, No. 5-6, May-June 1981, pages 581-596, discloses a terminal supervisor which can be adapted to diversified network facilities for more effective maintenance management.

The present invention provides an alternative solution to the problem of informing the user in a user friendly manner of the logging of selected errors and of presenting the user with a high level of detail of the error condition without affecting the performance of the computer system.

The present invention provides a method of automatically displaying selected messages based on error messages generated internally of a computer system, the computer system comprising an error log request handler, a message log request handler and operating system message file containing at least one pre-existing message having a plurality of fields, the method being characterised by the step of: comparing error identification information of the error message with equivalent entries in a message look-up table, generating a user message request comprising an identification of a pre-existing message and selected data if a match is found, transmitting the user message request from the error log request handler to the message log request handler, retrieving, in response to the user message request, the pre-existing message from the operating system message file, and inserting the selected data into the fields of the pre-existing message for display on the computer system.

Such an arrangement results in displaying user friendly messages in response to an error log request. An error log request which has been generated by a component of a communication sub-system is analysed and compared to entries in one of a plurality of records in a message look-up table. If there is a match between the fields of the error log request and selected entries of a record in the look-up table, a user message request is generated which facilitates the display of a pre-existing user friendly message as modified with data included in the generated user message request.

The present invention will be described further by way of example with reference to an embodiment thereof as illustrated in the accompanying drawings, in which:
Figure 1 is a block diagram of a computer system on which the method of the present invention may be employed;
Figure 2 is a block diagram of a control block used for error log requests within the computer system;
Figures 3 through 5 are block diagrams of a look-up table which facilitates the display of messages based on error log requests;
Figure 6 is a block diagram of a message function utility embodying certain principles of the invention; and
Figure 7 is a flow diagram illustrating the detailed steps of the method of the present invention.

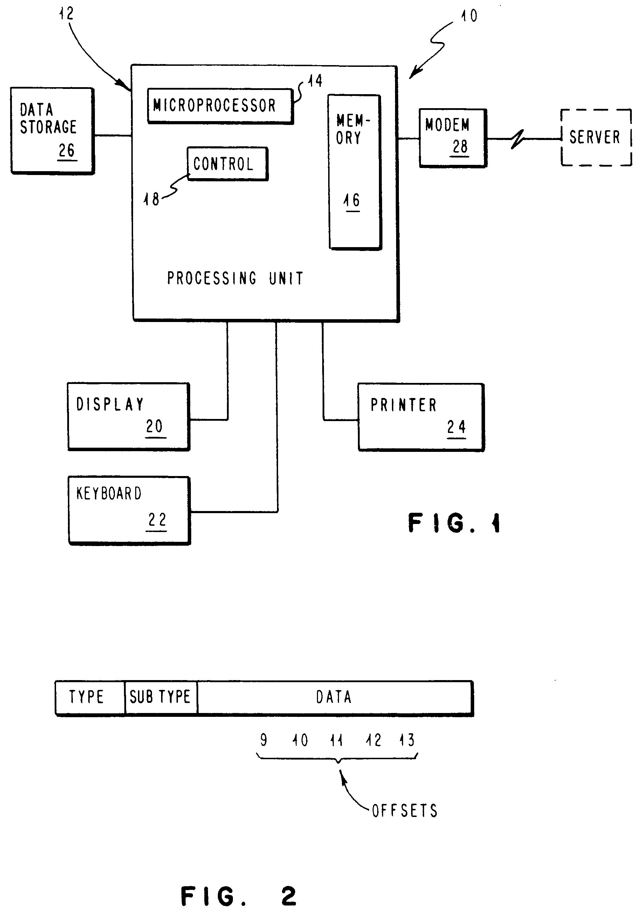

Referring to Fig. 1, there is shown a computer system 10 on which the present invention may be employed. System 10 includes a central processing unit 12 having a microprocessor 14, a memory system 16 and a control system 18 which functions to control input/output operations in addition to the interaction between the microprocessor and the memory system. System 10 also includes a group of conventional peripheral units including a display device 20, a keyboard 22, a printer 24, a data storage unit 26 and a modem 28. Since the details of the above described functional systems form no part of the present invention and can be found in the prior art, only a brief functional description of each of the systems will be set forth.

The central processing unit 12 corresponds to the "system unit" of a personal computer system such as the IBM XT model 286 or the IBM AT or the IBM Personal Systems/2 computer systems. The central processing unit 12 is provided with a multitasking operating system program such as the IBM Operating System/2 which is normally employed to run the systems. The operating system program is stored in memory system 16 along with one or more application programs that the user has selected to run. Depending on the capacity of the memory system 16 and the size of the application programs, portions of these programs, as needed, may be transferred to the memory system 16 from the data storage unit 26 which may include, for example, a hard disk drive and a diskette drive. The basic function of the data storage unit 26 is to store programs and data which are employed by the system 10 and which may readily be transferred to the memory system 16 when needed. The function of the diskette drive is to provide a removable storage function for entering programs and data into the system, and a vehicle for storing data in a form that is readily transportable for use on other computer systems.

Display device 20 and keyboard 22 together provide for an interactive operation of the computer system 10 wherein the interpretation that the computer system gives to a specific keystroke by the user depends, in substantially all situations, on what is being displayed to the user at that point in time.

In certain situations, the user, by entering commands into the computer system 10, causes the system to perform a certain function. In other situations, the computer system 10 requests the entry of certain data, generally by displaying a prompt type of menu/message screen. The depth of the interaction between the user and the computer system 10 varies by the type of operating system and the application program, but is a necessary characteristic of the computer systems on which the method of the present invention may be employed.

As noted above, computer system 10 includes the printer 24 which functions to provide a hard copy output of data developed or stored in the computer system. The modem 28 functions to transfer data from the computer system 10 to a remote host system or server system through one or more communication links which may be a commercial type link or a dedicated communications link.

System 10 also includes a communication sub-system stored in memory 16 thereof. The communication sub-system includes a message function program as a integral part thereof which enables the system to display user friendly messages based upon information which is passed in an error log request. The communication sub-system also includes a plurality of components which perform various communication services and functions within system 10. During the execution of one of the various communication services or functions, a problem may occur which causes an associated error to be logged to the error log for later analysis. Typically, the error information is in a language which is not readily understood by the average user of system 10. Moreover, the component performing the service or function is only concerned with logging the error information. Thus, the user in prior systems may not know that an error has been logged which may prevent a function from being executed or a service performed. This becomes more of a problem in a multitasking environment. In this environment, the user may initiate one task and then change to a different screen to initiate a different task. While the user is operating on the different screen, the first task may encounter problems which prevents the task from executing. For purposes of illustration, the use may initiate the transfer of a large file and then switch to a personal editor function on system 10 while the file is being transferred. If a problem occurs which prevents the file from transferring, the user may never know of the error unless the progress of the transfer is frequently monitored. As noted above, even if the user is aware of an error, the information stored in the error log may be very cryptic and not easily understood. The present invention solves the problem by using a look-up table which is a part of an error log request handler. When there is a request to log an error, the error log request handler upon receiving the request compares various parts of the error information to information stored in the look-up table. If there is a match of the various parts of the error and the elements in the look-up table, the error log request handler generates a user message request and sends the request to a message log request handler. The error log request handler also forwards data to be inserted into a message to be generated and displayed to the user.

Referring to Fig. 2, there is shown a block diagram of a control block which is generated by the component requesting the logging of an error. The control includes type, sub-type and data sections. The type and sub-type sections identifies the type of error which was generated. The data section contains at least the identification of the component of the function which submitted the error request and the cause of the error. The data sections are subdivided into groups or offsets. These groups or offsets will vary depending on the type of error. The offsets are used by the error log request handler in comparing the various sections of the control block to entries in the look-up table.

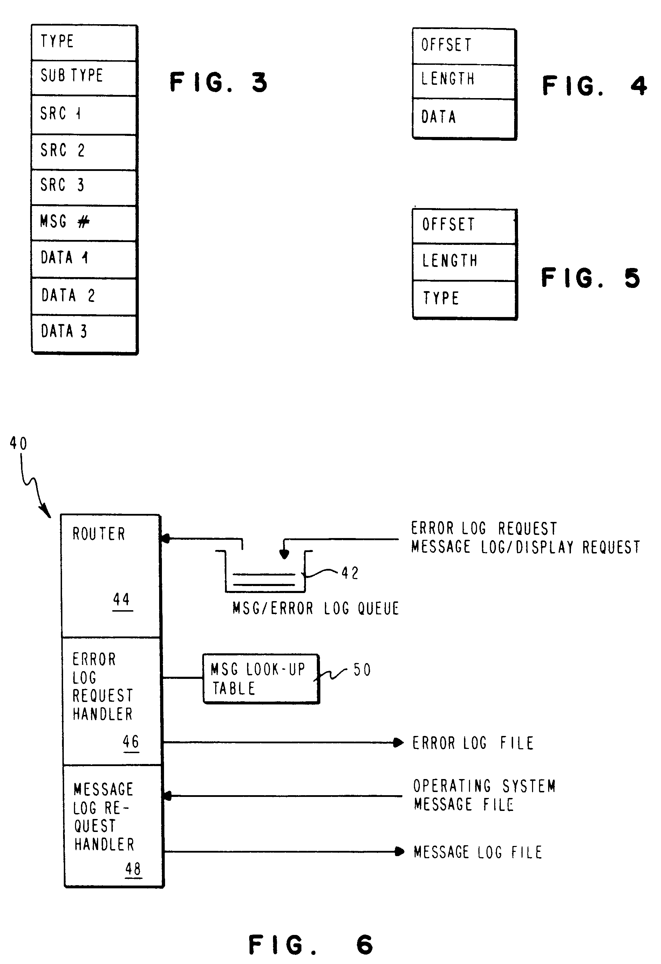

Referring to Fig. 3, there is shown a block diagram of the look-up table. The look-up table may include a type, sub-type, search 1, search 2, search 3, message number, data 1, data 2 and data 3 field entries. The search 1, search 2 and search 3 provide for finer granularity of match criteria. Data 1, data 2 and data 3 provide the ability to extract data from the error data and insert it into the user message to be displayed. The contents of the message number field entry, which will be transmitted to the message log request handler if a match is found, also includes an indication whether the message to be generated is to be logged in the message log and displayed, to be displayed only or to be logged only. Each of the search field entries, as shown in Fig. 4, may include an offset entry, a length entry and a data entry, of the data to be matched. Each of the data field entries, as shown in Fig. 5, may include an offset entry, a length entry and a type entry. The type entry of each of the data fields is an indication of whether the data is in hexadecimal of ASCII form.

Referring to Fig. 6, where is shown a block diagram of the message/error log handling facility 40. Error log requests and message log/display requests, which are generated by the components of the communication sub-system, are placed into a message/error log queue 42. A router 44 removes each of the error log requests and message log/display requests and routes the request to the error log request handler 46 or the message log request handler 48. The error log request handler 46 then assembles an error record from the information contained in the control block and stores the error record into the error log file. After the error record has been assembled and logged, the error log request handler 46 performs a comparison of the record with entries in the message look-up table 50 to determine if a message should be generated as a result of the error log request. The search consists of comparing the error log type and sub-type of the control block with equivalent entries in the look-up table. If search 1, search 2, or search 3 criteria were specified in the message look-up table, they are compared against the data in the error log request. If a match is found, a user message request is generated using data from the control block if data 1, data 2, or data 3 were specified in the message look-up table. The message request generated by the error log request handler 46 is passed to the message log request handler 48. A message number entry along with any error data to be inserted into the message is transmitted to the message handler 48 as a part of the generated message request. The operating system includes a message file which includes a plurality of pre-existing messages with data fields included therein. Upon receiving the message request from the error log request handler 46, the message handler 48 extracts the message number entry and determines whether the message to be generated is to be logged to the message log and displayed, displayed only or logged only. If the message is to be displayed, the message handler 48 retrieves the message identified by the message number from the operating system message file. The error log request handler 46 also passes data which are to be inserted in the message to be displayed to the user.

The data are inserted in the message and the complete message is then displayed to the user. The message number entry also determines if the message is to be displayed and/or logged irrespective of the screen group being displayed to the user. As noted above, the message may also be logged to the message log for later analysis.

Set out below is an illustration of the error log request handler message look-up function program for displaying messages based upon error log requests. The message function program is in program design language from which source code and machine code are derivable.

### MESSAGE LOOK-UP FUNCTION LOGIC

POINT TO START OF MESSAGE LOOK-UP TABLE
DO UNTIL END OF TABLE OR MATCH FOUND
IF CONTROL BLOCK ERROR TYPE MATCHES TABLE TYPE
THEN
IF TABLE HAS MATCH CRITERIA TO MEET THEN
COMPARE CRITERIA TO CONTROL BLOCK DATA
FIELD
IF CRITERIA MET THEN
INDICATE MATCH FOUND
EXDO (EXIT TABLE SEARCH)
ENDIF
ELSE (NO MATCH CRITERIA TO MEET)
INDICATE MATCH FOUND
EXDO (EXIT TABLE SEARCH)
ENDIF
ENDIF
ENDIF
POINT TO NEXT TABLE ELEMENT
ENDDO
IF TABLE MATCH FOUND THEN
BUILD REQUEST BLOCK FOR MESSAGE REQUEST HANDLER
USING DATA FROM MESSAGE LOOKUP TABLE ENTRY
CALL MESSAGE LOG REQUEST HANDLER (TRANSMIT
REQUEST BLOCK)
ENDIF

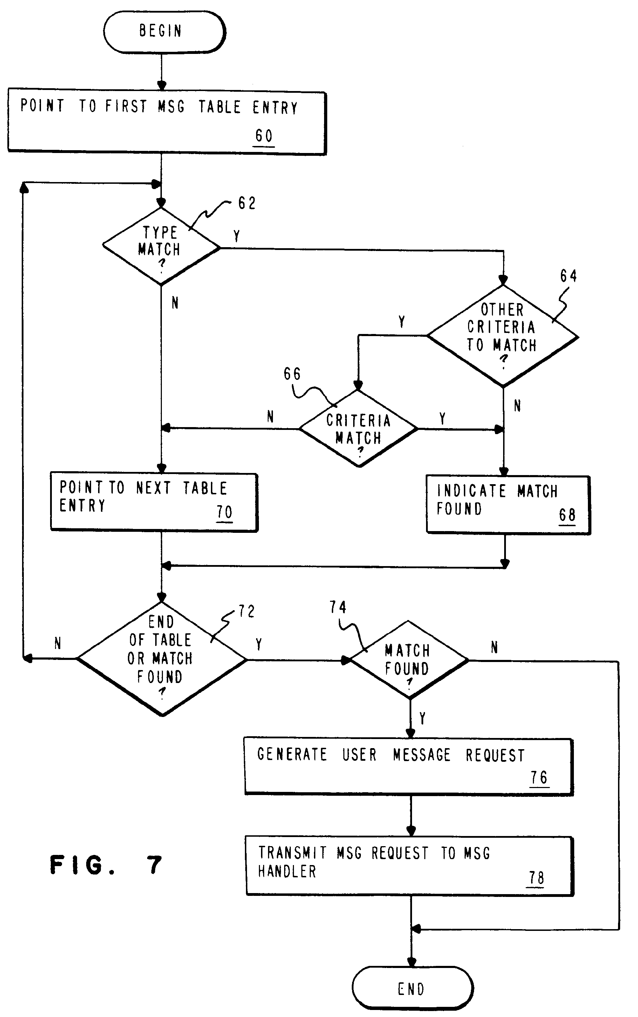

Referring to Fig. 7, there is shown a flow diagram for the error log request handler message look-up function program. After the router 44 has transmitted a error log request to the error handler 46, a pointer in the message look-up table is initialised to the first table entry therein in step 60. In step 62, a determination is made whether the error log type field in the control block matches the type entry in the message look-up table. If the table entry and the error type field do not match, the pointer is moved to the next table entry in step 70. However, if there is a match in step 62, a determination is made in step 64 whether there are other criteria to be matched. If there are other criteria, such as the search fields or a sub-type field, they are compared to equivalent entries in the look-up table. Control is returned to step 70 if the search fields do not match. Otherwise, in step 68, an indication is made that a match was found between the search fields and control is then transferred to step 72. Step 72 determines whether the end of the message look-up table has been attained or if a match has been found. If there are other records in the message look-up table to be searched and a match has not been found, control is transferred to step 62 in order to compare the new entry identified in step 70 with the control block fields. Step 74 determines whether a match was found. If the match was not found and there are no other entries in the look-up table, the search is terminated without displaying a message. If a match was found, a user message request is generated in step 76 by the error log request handler 46 (Fig. 6). The user message request is then transmitted to the message handler 48 (Fig. 6) in step 78. The message handler then retrieves the message specified in the user message request, enters the data, if any, received from the error log request handler 46 and facilitates the display and/or logging of the message to the user.

## Claims

1. A method of automatically displaying selected messages based on error messages generated internally of a computer system (10), the computer system comprising an error log request handler (46), a message log request handler (48) and operating system message file containing at least one pre-existing message having a plurality of fields, the method being characterised by the step of:
comparing error identification information of the error message with equivalent entries in a message look-up table (50),
generating a user message request comprising an identification of a pre-existing message and selected data if a match is found,
transmitting the user message request from the error log request handler (46) to the message log request handler (48),
retrieving, in response to the user message request, the pre-existing message from the operating system message file, and
inserting the selected data into the fields of the pre-existing message for display on the computer system.

2. A method as claimed in claim 1, wherein the error log request includes a type, a sub-type and data fields.

3. A method as claimed in claim 2, wherein the look-up table includes a plurality of records each having a plurality of entries.

4. A method as claimed in claim 3, wherein the step of comparing includes the step of comparing each of the fields with each of the plurality of entries of each record until a match is found or until all records of the look-up table have been searched.

5. A method as claimed in claim 1, further including the steps of:
assembling an error record from information contained in log request; and
storing the error record into an error log.

6. A method as claimed in claim 5, further including the step of storing the displayed message into a message log.

## Patentansprüche

1. Eine Methode zum automatischen Anzeigen ausgewählter Meldungen, basierend auf Fehlermeldungen, die von einem Computersystem (10) intern generiert werden, wobei das Computersystem einen Fehlerprotokollanforderungs-Handler (46), einen Meldungsprotokollanforderungs-Handler (48) und eine Betriebssystem-Meldungsdatei umfaßt, die mindestens eine bereits existierende Meldung mit einer Vielzahl von Feldern enthält, wobei die Methode durch folgende Schritte gekennzeichnet ist:
Vergleichen von Fehlerkennungsinformationen der Fehlermeldung mit entsprechenden Einträgen in einer Meldungs-Nachschlagtabelle (50),
Generieren einer Benutzermeldungs-Anforderung, die eine Kennung einer bereits existierenden Meldung und ausgewählte Daten umfaßt, wenn eine Übereinstimmung gefunden wird,
Übertragen der Benutzermeldungs-Anforderung vom Fehlerprotokollanforderungs-Handler (46) zum Meldungsprotokollanforderungs-Handler (48),
Abrufen der bereits existierenden Meldung aus der Meldungsdatei des Betriebssystemsin Antwort auf die Benutzermeldungs-Anforderung, und
Einfügen der ausgewählten Daten in die Felder der bereits existierenden Meldung zur Anzeige in dem Computer-system.

2. Eine Methode nach Anspruch 1, bei der die Fehlerprotokoll-Anforderung einen Typ, einen Sub-Typ und Datenfelder enthält.

3. Eine Methode nach Anspruch 2, bei der die Nachschlagtabelle eine Vielzahl von Datensätzen enthält, die jeweils eine Vielzahl von Einträgen aufweisen.

4. Eine Methode nach Anspruch 3, bei der der Vergleichsschritt das Vergleichen jedes Felds mit jedem Eintrag jedes Datensatzes umfaßt, bis eine Übereinstimmung gefunden wird, oder bis alle Datensätze der Nachschlagtabelle durchsucht sind.

5. Eine Methode nach Anspruch 1, desweiteren folgende Schritte umfassend:
Assemblieren eines Fehlersatzes aus den in der Protokollanforderung enthaltenen Informationen; und
Speichern des Fehlersatzes in einem Fehlerprotokoll.

6. Eine Methode nach Anspruch 5, desweiteren den Schritt des Speicherns der angezeigten Meldung in einem Meldungsprotokoll enthaltend.

## Revendications

1. Procédé pour afficher automatiquement des messages sélectionnés basés sur des messages d'erreur engendrés de façon interne dans un système ordinateur (10), le système ordinateur comprenant un gestionnaire de demandes de journal des erreurs (46), un gestionnaire de demandes de journal des messages (48) et un fichier des messages du système d'exploitation contenant au moins un message pré-existant ayant une pluralité de champs, ledit procédé étant caractérisé par les étapes de:
comparer des informations d'identification d'erreur du message d'erreur avec des entrées équivalentes dans une table de consultation de messages (50),
engendrer une demande de message de l'utilisateur comprenant une identification d'un message pré-existant et des données sélectionnées s'il y a correspondance,
transmettre la demande de message de l'utilisateur depuis le gestionnaire de demandes de journal des erreurs (46) jusque sur le gestionnaire de demandes de journal des messages (48),
récupérer, en réponse à la demande de message de l'utilisateur, le message pré-existant provenant du fichier de messages du système d'exploitation, et
insérer les données sélectionnées dans les champs du message pré-existant en vue d'un affichage sur le système ordinateur.

2. Procédé selon la revendication 1, dans lequel la demande de journal des erreurs comprend des champs de type, de sous-type et de données.

3. Procédé selon la revendication 2, dans lequel la table de consultation comprend une pluralité d'enregistrements ayant chacun une pluralité d'entrées.

4. Procédé selon la revendication 3, dans lequel l'étape de comparer comprend l'étape de comparer chacun des champs avec chacune de la pluralité d'entrées de chaque enregistrement jusqu'à ce qu'il y ait correspondance et jusqu'à ce que tous les enregistrements de la table de consultation aient été recherchés.

5. Procédé selon la revendication 1, comprenant en outre les étapes de:
assembler un enregistrement d'erreur à partir d'informations contenues dans la demande de journal; et
emmagasiner l'enregistrement d'erreur dans le journal des erreurs.

6. Procédé selon la revendication 5, comprenant en outre l'étape d'emmagasiner le message affiché dans un journal des messages.
